# EUROPEAN PATENT APPLICATION

(11) **EP 2 296 408 A1**
(43) Date of publication of application: **16.03.2011**
(21) Application number: 09305836.0
(22) Date of filing: 14.09.2009
(51) Int. Cl.: H04W 48/12

(54) **A method for scheduling transmissions between a base station and user terminals, a base station and a communication network therefor**

(71) Applicant: Alcatel Lucent, 75008 Paris (FR)
(72) Inventor: Kaminski, Stephen, 73054, Eislingen (DE); Keil, Klaus, 73730, Esslingen (DE)
(74) Representative: Kleinbub, Oliver

(57) **Abstract**

Method for scheduling transmissions between a base station (BS) and user terminals (UE) by sending scheduling grants on physical downlink control channels in a subframe with a dedicated amount of control channel elements for each physical downlink control channel, wherein priorities of said transmissions between the base station (BS) and the user terminals (UE) are determined based on the dedicated amount of control channel elements for each physical downlink control channel, and the transmissions between the base station (BS) and the user terminals (UE) are scheduled in the order of said priorities, a base station and a communication network therefor.

## Description

### Field of the invention

The invention relates to a method for scheduling transmissions between a base station and user terminals by sending scheduling grants on physical downlink control channels in a subframe with a dedicated amount of control channel elements for each physical downlink control channel, and a base station adapted to perform said method.

### Background

In cellular communication networks using standards based on Time Division Duplex (TDD), like e.g. Third Generation Partnership Long Term Evolution Time Division Duplex (3GPP LTE-TDD) standard, the same frequency resources are used in uplink and downlink. The time division scheme only allows for either downlink or uplink to be sent at a certain transmit time interval (TTI). The transmissions of both uplink and downlink transmissions are announced via the so-called physical downlink control channel (PDCCH).

The downlink transmissions are announced in the same transmit time interval in which the actual data transmission happens. In uplink direction, the transmission needs to be announced in a preceding downlink transmit time interval, as the radio signal needs some time to propagate from the base station (eNB) to the user terminal (UE), and the user terminal needs furthermore some time to prepare the uplink transmission and the uplink transmission has to be sent some time earlier than the reception at the base station is expected. Thus, in 3GPP LTE the grant of an upcoming uplink transmission has to be sent at the latest in the subframe being 4 subframes before the transmission is expected to arrive at the base station (eNB).

E.g., if the uplink transmission has to be received in subframe 7 at the base station, the corresponding grant has to be sent at the latest in subframe 3 from the base station. If this subframe 3 is an uplink subframe, the corresponding grant has to be sent even earlier, i.e. in the closest downlink subframe before the one in which the grant can be sent at the latest time. In this downlink subframe, both downlink transmissions, which are performed in the same downlink subframe, and uplink transmissions, which are performed in an upcoming uplink subframe, have to be signalled simultaneously. The maximum amount of resources for such grants are limited by the specified maximum size of the downlink control region, which is at least 1 up to 3, in some limited cases up to 4, OFDM symbols (OFDM = Orthogonal Frequency Division Multiplexing). In case of normal cyclic prefix, each downlink subframe consists of 14 OFDM symbols in total. The remaining 10 to 13 OFDM symbols carry the actual data transmissions.

Additionally, together with the downlink and uplink grants, the so-called HARQ feedback (HARQ = Hybrid Automatic Repeat Request) is sent within the downlink control region, which further reduces the amount of available PDCCH control channel elements (CCEs) that can be used for the transmissions of grants. The number of available PDCCH control channel elements per subframe varies between a lower and an upper bound, depending on which uplink/downlink configuration is applied. Uplink/downlink configuration in this case means the assignment which subframe of a sequence of 10 subframes, i.e. of a frame, is an uplink subframe and which is a downlink subframe.

### Summary

The main problem of the method for scheduling transmissions according to the prior art is that in subframes in which additionally to the announcement of downlink transmissions, the uplink transmissions are announced, the HARQ feedback indications further reduce the amount of available PDCCH control channel elements for the grants. This means, the available PDCCH control channel elements are typically the most if only downlink transmissions are announced and are the least in cases when downlink and uplink transmissions together with HARQ feedback indications have to be announced.

According to the prior art, the downlink scheduling allocates the radio resources to the user terminals which have the highest priority according to their Quality of Service (QoS) requirements and according to their radio channel quality, i.e. the higher the radio channel quality of a user terminal is, the higher the scheduling priority of the user terminal is under the condition that the QoS requirements of the user terminal are fulfilled.

This procedure leads to a certain number of user terminals which are scheduled simultaneously in each transmit time interval (TTI). To achieve the highest efficiency of the radio resources, the number of scheduled user terminals per TTI is adapted by the scheduling function. In subframes with limited amount of PDCCH control channel elements, the number of schedulable user terminals is normally decreased. However, if the number of user terminals, among which the transmissions and their corresponding resources are distributed, is limited, any method for a resource assignment is limited as well, thus leading to an overall efficiency which is increasable.

Thus, especially for such subframes in which uplink and downlink grants need to be sent, and which may additionally suffer from PDCCH control channel element shortage due to HARQ feedback, the usage of the PDCCH control channel elements for uplink and downlink grants needs to be improved.

In existing solutions, no subframe dependent distinction according to the distance of the user terminals from the base station and according to the radio conditions is made for the number of PDCCH control channel elements for scheduled uplink and downlink transmissions per subframe. The number of user terminals that can be scheduled in uplink direction mostly depends on the available amount of PDCCH control channel elements. The amount of used PDCCH control channel elements, which is also called aggregation level, for downlink grants for user terminals is not intentionally varied over time, which leads to the disadvantage that the efficiency of the uplink shared channel resources is not as high as it can be with an improved scheduling method. In other words, in the state of the art, the probability distribution of the used amount of PDCCH control channel elements per downlink grant does not change over the subframes, i.e. the probability distribution of the used amount of PDCCH control channel elements per downlink grant does not depend on specific subframes.

The object of the invention is thus to propose a method for scheduling transmissions between a base station and user terminals with improved resource usage.

This object is achieved by a method for scheduling transmissions between a base station and user terminals by sending scheduling grants on physical downlink control channels in a subframe with a dedicated amount of control channel elements for each physical downlink control channel, wherein priorities of said transmissions between the base station and the user terminals are determined based on the dedicated amount of control channel elements for each physical downlink control channel, and the transmissions between the base station and the user terminals are scheduled in the order of said priorities.

The object is furthermore achieved by a base station for scheduling transmissions between said base station and user terminals by sending scheduling grants on physical downlink control channels in a subframe with a dedicated amount of control channel elements for each physical downlink control channel, said base station comprising at least one processing means which is adapted to determine priorities of said transmissions between the base station and the user terminals based on the dedicated amount of control channel elements for each physical downlink control channel, and which is adapted to schedule the transmissions between the base station and the user terminals in the order of said priorities.

According to one embodiment of the invention, an improvement of the usage of the PDCCH control channel elements is achieved by making the usage of the PDCCH control channel elements dependent on whether the subframes are carrying downlink grants only, or uplink and downlink grants.

The invention is described in the following within the framework of 3GPP LTE, however as the invention is not restricted to 3GPP LTE, but can in principle be applied in other networks that use scheduling grants on a downlink channel, like e.g. in WiMAX networks, in the following, instead of the term eNodeB, the more general term base station is used.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows exemplarily the usage of resource elements as control channel elements.
Fig. 4 schematically shows the general behaviour of scheduling weights for downlink transmissions according to an embodiment of the invention.
Fig. 5 schematically shows exemplarily an example of scheduling weights for downlink transmissions according to an embodiment of the invention.
Fig. 6 schematically shows exemplarily an example of scheduling weights for uplink transmissions according to an embodiment of the invention.

### Description of the embodiments

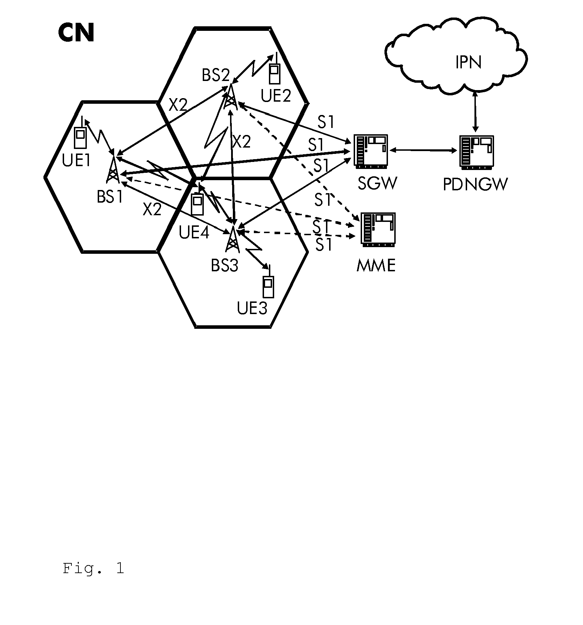

Fig. 1 shows as an example of a communication network in which the invention can be implemented a communication network CN according to the standard 3GPP LTE.

Said communication network CN comprises base stations BS1-BS3, user terminals UE1-UE4, a serving gateway SGW, a packet data network gateway PDNGW, and a mobility management entity MME.

Each of said user terminals UE1-UE4 is connected via radio connections to one or multiple of said base stations BS1-BS3, which is symbolized by flashes in fig. 1. The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between a base station BS1-BS3, i.e. a eNodeB in this example, and the Evolved Packet Core (EPC). The S1 interface has two flavours, S1-MME for exchange of signalling messages between the base station BS1-BS3 and the mobility management entity MME and S1-U for the transport of user datagrams between the base station BS1-BS3 and the serving gateway SGW.

The X2 interface is added in 3GPP LTE standard in order to transfer the user plane signal and the control plane signal during handover, and in order to perform coordinated multipoint reception or transmission. For coordinated multipoint reception in uplink, base stations BS1-BS3 in the coordination area or group transfer the data which they received at their respective air interface to a coordinating device, e.g. to a master base station BS3 or to an external coordinated multipoint coordinating device which is not shown in fig. 1, preferably via the so-called X2 interface, i.e. via the backhaul, for evaluation of the data from the different base stations BS1-BS3.

The serving gateway SGW performs routing of the IP user data between the base station BS1-BS3 and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal (UE1-UE4) and the respective serving base station (BS1-BS3).

The mobility management entity MME performs tasks of the subscriber management and the session management, and also performs the mobility management during handover between different access networks.

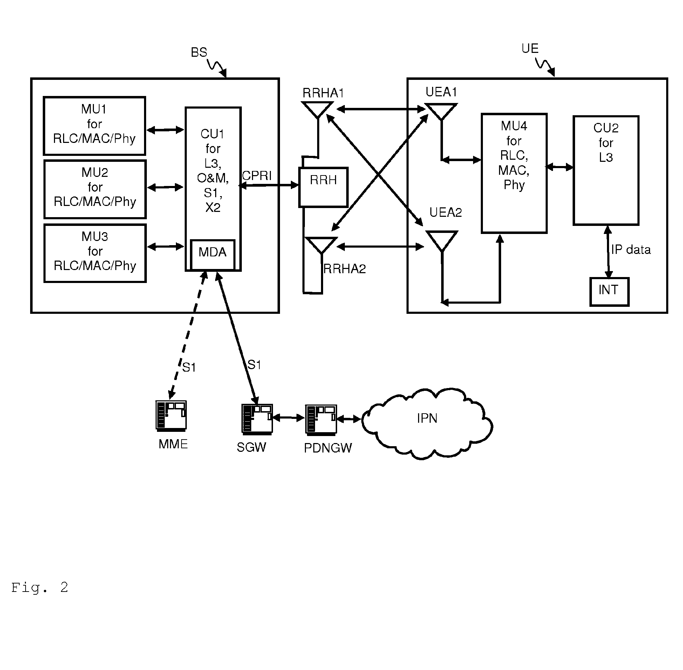

Fig. 2 schematically shows the structure of a user terminal and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and the control unit board CU1 is in turn connected to a remote radio head RRH via a so-called Common Public Radio Interface (CPRI).

The remote radio head RRH is connected by way of example to two remote radio head antennas RRHA1 and RRHA2 for transmission and reception of data via a radio interface.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), switches and memories, like e.g. Double Data Rate Synchronous Dynamic Random Access Memories (DDR-SDRAM) in order to be enabled to perform the tasks described above.

The remote radio head RRH comprises the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity of different media like e.g. video streaming or web browsing.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 via the control unit board CU over the Common Public Radio Interface to the remote radio head and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH preferably via lossless fibre links that carry the CPRI data. This architecture reduces costs for service providers because only the remote radio heads RRH containing the so-called radio equipment, like e.g. amplifiers, need to be situated in environmentally challenging locations. The base stations BS can be centrally located in less challenging locations where footprint, climate, and availability of power are more easily managed.

The user terminal antennas UE1, UE2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the on the MAC layer (MAC = Media Access Control) which is responsible and Hybrid Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

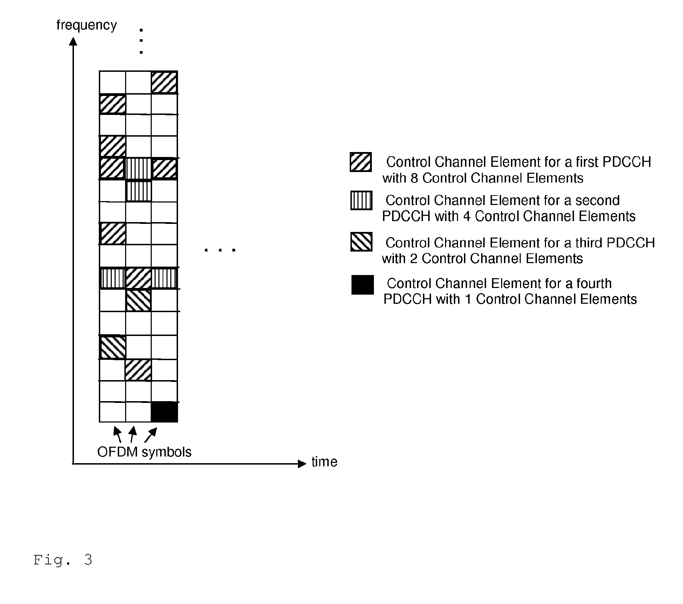

Fig. 3 shows the usage of resource elements as control channel elements for physical downlink control channels (PDCCH) which will be described in the following.

The three OFDM symbols that build the control region in this example are depicted in fig. 3.

The further OFDM symbols of the subframe along the time axis used for data transport are not depicted for the sake of simplicity. Along the frequency axis, only 16 resource element groups each comprising several resource elements per OFDM symbol are depicted also for the sake of simplicity.

A first physical downlink control channel uses 8 control channel elements, each control channel element comprising several resource elements, i.e. the first physical downlink control channel has an aggregation level of 8. The control channel elements for said first physical downlink control channel are distributed over all three OFDM symbols.

A second physical downlink control channel uses 4 control channel elements, each control channel element comprising several resource elements, i.e. the second physical downlink control channel has an aggregation level of 4. The control channel elements for said second physical downlink control channel are distributed over all three OFDM symbols.

A third physical downlink control channel uses 2 control channel elements, each control channel element comprising several resource elements, i.e. the third physical downlink control channel has an aggregation level of 2. There is a control channel element for said third physical downlink control channel both in the first and in the second OFDM symbol.

A fourth physical downlink control channel uses 1 control channel element comprising several resource elements, i.e. the fourth physical downlink control channel has an aggregation level of 1. The control channel element for said fourth physical downlink control channel is in the third OFDM symbol.

In the example depicted in fig. 3, for the sake of simplicity all control channel elements only comprise resource elements which are adjacent in frequency and which are located in the same OFDM symbol. However, in reality the control channel elements comprise resource elements which are distributed over the OFDM symbols and over the frequency band.

In the example depicted in fig. 3, there is a relatively large amount of unused resource elements which could be used for further physical downlink control channels. However, if there are a lot of uplink and downlink transmissions to be announced in physical downlink control channels in a subframe, one may quickly run short of available control channel elements. Uplink grants are sometimes sent together with downlink grants and sometimes only downlink grants are sent. The maximum size of the control region is limited, thus if both uplink and downlink grants have to be sent, the control channel elements may be too few for sending all the information, i.e. for uplink and downlink grants, while there are enough control channel elements in the subframes in which only downlink grants need to be sent. Thus, there is a need of a method for assigning resource elements of the control region to physical downlink control channels, i.e. to announce dedicated transmissions of user data by choosing the respective physical downlink control channels, that improves the usage of resources for user data transmission in uplink and downlink.

According to one embodiment of the invention, the scheduling of the downlink transmissions is done in a way that leaves more PDCCH control channel elements for the uplink grants.

The amount of PDCCH control channel elements that a grant occupies depends on the user terminal specific overall radio channel quality.

There are four different sizes defined for the grants, which are the so-called aggregation levels 1, 2, 4 and 8 with a size of 1, 2, 4 and 8 control channel elements respectively. A grant for a transmission to or from a user terminal experiencing very good radio conditions, i.e. the best case, will thus consume only one control channel element, while a grant for a transmission to or from a user terminal experiencing very bad radio conditions, i.e. worst case, will consume eight control channel elements.

According to the embodiment of the invention, the downlink transmissions of user terminals which have a lower radio channel quality, i.e. a higher aggregation level, are preferably scheduled in subframes in which only downlink grants are sent and which are henceforth called the pure downlink subframes. On the other hand, in subframes, i.e. TTIs, in which both uplink and downlink transmissions are scheduled, and which are henceforth called the uplink and downlink subframes, the downlink transmissions of user terminals which have a rather good radio channel quality, i.e. a lower aggregation level, are preferably scheduled.

As the amount of PDCCH control channel elements depends on the overall radio channel quality, e.g. derived from the so-called wideband channel quality indicator (CQI), it is possible to distribute the PDCCH control channel elements in a fair and efficient way among downlink and uplink grants.

Preferably, in pure downlink subframes, the downlink transmissions consuming more PDCCH control channel elements, i.e. the higher aggregation levels, are placed. In combined uplink and downlink subframes, the downlink transmissions that consume less PDCCH control channel elements and thus leave more PDCCH control channel elements to the grants for uplink transmissions, are scheduled.

If said method according to the embodiment of the invention is applied, the probability distribution of the used amount of PDCCH control channel elements for downlink grants is subframe dependent.

On the one hand, there is a lower probability for downlink grants with higher aggregation levels and higher probability for downlink grants with lower aggregation levels in subframes in which both uplink and downlink grants are sent.

On the other hand, there is a higher probability for downlink grants with higher aggregation levels and lower probability for downlink grants with lower aggregation levels in subframes in which only downlink grants are sent.

In the embodiment of the invention, the probability distribution of the aggregation levels for the uplink grants is subframe independent, i.e. the same in all subframes.

However, in further embodiments of the invention described below, even the probability distribution of the aggregation levels for the uplink grants is modified and may vary from subframe to subframe.

The proposed scheduling method can easily be applied by introduction of a scheduling weight, that, in subframes in which only downlink grants have to be sent, increases the scheduling priority of downlink transmissions for user terminals with a lower wideband CQI, which thus have higher aggregation levels.

For the different subframes such an aggregation level dependent scheduling weight reflecting the scheduling priority can easily be derived from a lookup table.This lookup table depends on the chosen uplink/downlink configuration, as for configurations with more downlink subframes in a frame, the scheduling weights for downlink grants with a high aggregation level can be higher. Furthermore, the order of uplink, downlink and so-called special subframes depends on the chosen uplink/downlink configuration and has an impact on the maximum amount of resource elements that can be used for HARQ feedback for uplink in the different subframes and thus has an impact on the total amount of available PDCCH control channel elements in the different subframes. A special subframe may be configured in a way that in the special subframe only uplink grants are sent, as no OFDM symbols are left for user data. Examples for such a special subframe are special subframe configurations 0 and 5 with normal cyclic prefix and 0 and 4 with extended cyclic prefix as defined in the standard 3GPP 36.211.

The values of the scheduling weights within this lookup table can be modified according to the observed control channel element occupancy in the following way. In case the average control channel element occupancy in pure downlink subframes is significantly lower than in combined uplink and downlink subframes, the scheduling weight for downlink grants consuming more PDCCH control channel elements, i.e. the higher aggregation levels, is increased for pure downlink subframes. The same effect can be achieved by decreasing the scheduling weight for downlink grants consuming more PDCCH control channel elements, i.e. the higher aggregation levels, in combined uplink and downlink subframes. A combination of both scheduling weight adaptations described above is applicable, too.

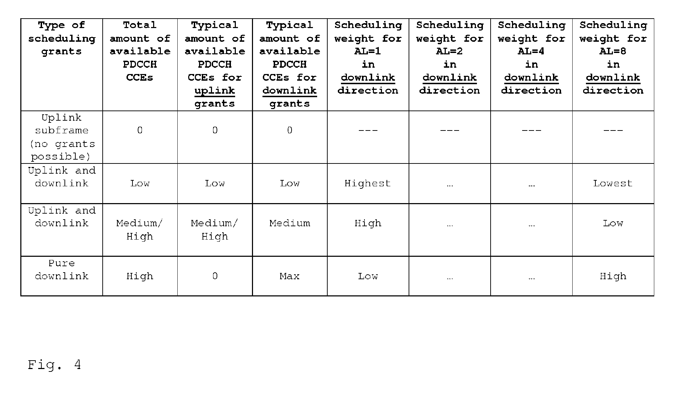

The general behaviour of scheduling weights for downlink transmissions which are dependent on the type of scheduling grant and the aggregation level according to the embodiment of the invention are shown in fig. 4 in the form of a lookup table exemplarily for the uplink/downlink configuration 1 as defined in the standard 3GPP 36.211 chapter 4.2.

In the first column of the lookup table, the type of the scheduling grant is given, i.e. it is indicated whether there are uplink and downlink grants or only downlink grants announced in the subframe.

In the second column of the lookup table, the total amount of available PDCCH control channel elements are given, which can be calculated by subtracting the amount of resource elements scheduled for HARQ feedback from the overall amount of resource elements in the control region. The total amount of available PDCCH control channel elements can be divided into an amount of available PDCCH control channel elements for uplink grants and into an amount of available PDCCH control channel elements for downlink grants.

In the third column of the lookup table, a typical amount of available PDCCH control channel elements for uplink grants dependent on the total amount of available PDCCH control channel elements is given.

In the fourth column of the lookup table, a typical amount of available PDCCH control channel elements for downlink grants dependent on the total amount of available PDCCH control channel elements is given.

In the columns 5 to 8, the scheduling weights for downlink transmissions for the different aggregation levels (AL) 1, 2, 4 and 8 are given.

In the second row of the lookup table, the amounts of control channel elements and the scheduling weights for an uplink subframe are given. As in an uplink subframe, of course no grants can be transmitted in downlink, the total amount of available PDCCH control channel elements, the typical amount of available PDCCH control channel elements for uplink grants, and the typical amount of available PDCCH control channel elements for downlink grants are all zero. As a consequence, no scheduling weight for the different aggregation levels can be indicated.

In the third row of the lookup table, the amounts of control channel elements and the scheduling weights for a subframe in which uplink and downlink grants are announced are given for the case that the total amount of available PDCCH control channel elements is low.

As the total amount of available PDCCH control channel elements is low, also the typical amount of available PDCCH control channel elements for uplink grants and the typical amount of available PDCCH control channel elements for downlink grants can only be low.

As the typical amount of available PDCCH control channel elements for downlink grants is low, preferably downlink grants with a low amount of control channel elements, i.e. with a low aggregation level shall be scheduled, so that there is a higher chance that control channel elements for uplink grants are left.

Thus, the scheduling weights for downlink grants in this case decrease from a highest value for the aggregation level 1 to a lowest value for the aggregation level 8.

In the fourth row of the lookup table, the amounts of control channel elements and the scheduling weights for a subframe in which uplink and downlink grants are announced are given for the case that the total amount of available PDCCH control channel elements is medium or high.

If the total amount of available PDCCH control channel elements is medium, the typical amount of available PDCCH control channel elements for uplink grants is also approximately medium, and if the total amount of available PDCCH control channel elements is high, the typical amount of available PDCCH control channel elements for uplink grants is also approximately high. In both cases, the typical amount of available PDCCH control channel elements for downlink grants is approximately medium.

The reason for the tendency to assign a higher amount of uplink grants than downlink grants is, that viewed over the time span of a frame, there is anyway a higher amount of PDCCH control channel elements available for downlink grants than for uplink grants, as in a frame, 6 subframes are available for downlink grants, and only 4 subframes are available for uplink grants. This imbalance shall be adjusted by the proposed typical amounts of uplink and downlink grants.

As the typical amount of available PDCCH control channel elements for downlink grants is approximately medium, preferably downlink grants with a low amount of control channel elements, i.e. with a low aggregation level shall be scheduled, so that there is a higher chance that control channel elements for uplink grants are left. However, compared to the scenario depicted in the third row where the typical amount of available PDCCH control channel elements for downlink grants is only low, the scheduling weights for downlink grants with a higher aggregation level can be higher.

Thus, the scheduling weights in this case decrease from a high value for the aggregation level 1 to a low value for the aggregation level 8.

In the fifth row of the lookup table, the amounts of control channel elements and the scheduling weights for a subframe in which only downlink grants are announced are given. Subframes in which only downlink grants are announced have a high total amount of available PDCCH control channel elements e.g. in an uplink/downlink configuration of 1, as there is only a low maximum amount of resource elements that can be used for HARQ feedback for uplink in said subframes.

As the total amount of available PDCCH control channel elements is high, and there are no uplink grants to be announced, also the typical amount of available PDCCH control channel elements for downlink grants has a maximum value.

As the typical amount of available PDCCH control channel elements for downlink grants is high and even maximum, and no uplink grants have to be announced, preferably downlink grants with a high amount of control channel elements, i.e. with a high aggregation level shall be scheduled.

Thus, the scheduling weights for downlink grants in this case increase from a low value for the aggregation level 1 to a high value for the aggregation level 8.

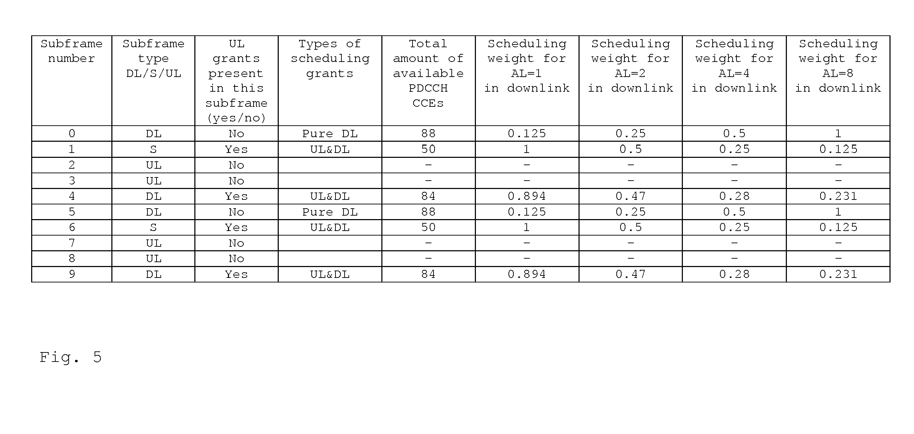

Fig. 5 shows exemplarily scheduling weights for downlink transmissions for a frame with ten subframes according to an embodiment of the invention in the form of a lookup table exemplarily for the uplink/downlink configuration 1 as defined in the standard 3GPP 36.211 chapter 4.2.

In the first column of the lookup table, the number of the subframe is indicated.

In the second column of the lookup table, the type of the subframe is indicated, i.e. it is indicated whether the subframe is a downlink subframe DL, an uplink subframe UL, or a special subframe S.

In the third column of the lookup table, it is indicated whether there are uplink grants announced in the subframe.

In the fourth column of the lookup table, the type of the scheduling grant is given, i.e. it is indicated whether there are uplink and downlink grants or only downlink grants announced in the subframe.

In the fifth column of the lookup table, the total amount of available PDCCH control channel elements, which can be calculated by subtracting the amount of resource elements reserved for the indication of the length of the control region and for HARQ feedback from the overall amount of resource elements in the control region, is given exemplarily with a specific parameterization and in case the control region is 3 OFDM symbols long. The total amount of available PDCCH control channel elements can be divided into an amount of available PDCCH control channel elements for uplink grants and into an amount of available PDCCH control channel elements for downlink grants.

In the columns 6 to 9, the scheduling weights for downlink transmissions for the different aggregation levels (AL) 1, 2, 4 and 8 are given.

In the second row of the lookup table, the total amount of available PDCCH control channel elements and the scheduling weights for downlink transmissions are given for a downlink subframe with the number 0 in which no uplink grants are present. The total amount of available PDCCH control channel elements is 88 and thus high.

As the total amount of available PDCCH control channel elements is high, and there are no uplink grants to be announced, also the typical amount of available PDCCH control channel elements for downlink grants has a high value.

As the typical amount of available PDCCH control channel elements for downlink grants is high and even maximum, and no uplink grants have to be announced, preferably downlink grants with a high amount of control channel elements, i.e. with a high aggregation level shall be scheduled.

Thus, the scheduling weights for downlink grants in this case increase from 0.125 for the aggregation level 1 to 0.25 for the aggregation level 2, to 0.5 for the aggregation level 4 and finally to 1 for the aggregation level 8.

In the third row of the lookup table, the total amount of PDCCH control channel elements and the scheduling weights for downlink transmissions are given for a special subframe with the number 1 in which uplink and downlink grants are announced. The total amount of available PDCCH control channel elements is 50 and thus low.

As the total amount of available PDCCH control channel elements is low, also the typical amount of available PDCCH control channel elements for uplink grants and the typical amount of available PDCCH control channel elements for downlink grants can only be low.

As the typical amount of available PDCCH control channel elements for downlink grants is low, preferably downlink grants with a low amount of control channel elements, i.e. with a low aggregation level shall be scheduled, so that there is a higher chance that control channel elements for uplink grants are left.

Thus, the scheduling weights for downlink grants in this case decrease from 1 for the aggregation level 1 to 0.5 for the aggregation level 2, to 0.25 for the aggregation level 4 and finally to 0.125 for the aggregation level 8.

The subframes with the numbers 2 and 3, which are indicated in the fourth and fifth row, are uplink subframes. As in an uplink subframe, of course no grants can be transmitted in downlink, the total amount of available PDCCH control channel elements is zero. As a consequence, no scheduling weight for the different aggregation levels can be indicated.

In the sixth row of the lookup table, the total amount of PDCCH control channel elements and the scheduling weights for downlink transmissions are given for a downlink subframe with the number 4 in which uplink and downlink grants are announced. The total amount of available PDCCH control channel elements is 84 and thus rather high.

As the total amount of available PDCCH control channel elements is rather high, the typical amount of available PDCCH control channel elements for uplink grants is approximately high and the typical amount of available PDCCH control channel elements for downlink grants is approximately medium.

As the typical amount of available PDCCH control channel elements for downlink grants is approximately medium, preferably downlink grants with a low amount of control channel elements, i.e. with a low aggregation level shall be scheduled, so that there is a higher chance that control channel elements for uplink grants are left. However, compared to the scenario depicted in the third row where the typical amount of available PDCCH control channel elements for downlink grants is only low, the scheduling weights for downlink grants with a higher aggregation level can be higher.

Thus, the scheduling weights for downlink grants in this case decrease from 0.894 for the aggregation level 1 to 0.47 for the aggregation level 2, to 0.28 for the aggregation level 4 and finally to 0.231 for the aggregation level 8.

The further subframes 5 to 9 are just a repetition of the subframes 0 to 4.

In another embodiment, additionally to the afore mentioned downlink scheduling method, the scheduling weight for the uplink transmissions is modified depending on the subframe and the number of available PDCCH control channel elements therein. The overall scheme is the same as before, but the behaviour is slightly different.

First of all, the lookup table does of course only contain entries for scheduling weights for subframes announcing uplink grants.

Second, the behaviour of the scheduling weights for the uplink transmissions has a different behaviour compared to downlink transmission.

Concerning the scheduling of downlink transmission, for subframes comprising uplink and downlink grants, the general behaviour of the scheduling weights remains the same for different amounts of available PDCCH control channel elements. Independently of the number of available PDCCH control channel elements, the downlink scheduling weights are higher for the lower aggregation levels and lower for the higher aggregation levels. However, the discrepancy between the minimum and maximum value of the scheduling weights is less in case of higher amount of available PDCCH control channel elements, as can e.g. be seen by comparing minima and maxima of scheduling weights in subframes 1 and 4 in fig. 5.

Concerning the scheduling of uplink transmission, the behaviour is different. If the number of PDCCH control channel elements is low, the highest priority is given to the lower aggregation levels. This behaviour is turned around for the subframes in which a rather high amount of PDCCH control channel elements is available. Here, the highest priority is given to the higher aggregation levels. In doing so, there is a quite fair overall distribution in a frame of the available PDCCH control channel elements to uplink and downlink grants, as 6 subframes are available for downlink grants, and only 4 subframes are available for uplink grants.

For said embodiment, the resulting subframe dependent lookup table for the aggregation level dependent uplink scheduling weights are given in the following.

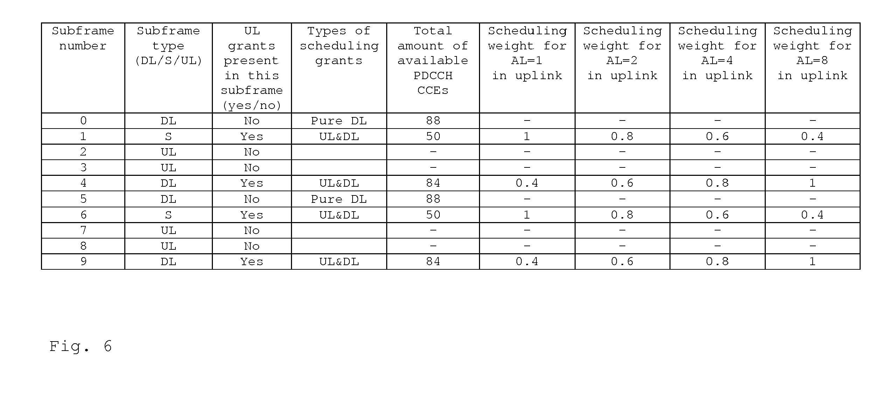

Fig. 6 shows exemplarily scheduling weights for uplink transmissions for a frame with ten subframes according to an embodiment of the invention in the form of a lookup table exemplarily for the uplink/downlink configuration 1 as defined in the standard 3GPP 36.211 chapter 4.2.

The lookup table in fig. 6 has basically the same entries as the lookup table in fig. 5 and thus, in the following only the differences are mentioned.

Only the subframes 1, 4, 6 and 9 comprise uplink grants, and thus, only in said subframes entries for the scheduling weights are present. In the third row of the lookup table, the total amount of PDCCH control channel elements and the scheduling weights for uplink transmissions are given exemplarily with a specific parameterization and in case the control region is 3 OFDM symbols long for a special subframe with the number 1 in which uplink and downlink grants are announced. The total amount of available PDCCH control channel elements in this example is 50 and thus low.

As the total amount of available PDCCH control channel elements is low, also the typical amount of available PDCCH control channel elements for uplink grants and the typical amount of available PDCCH control channel elements for downlink grants can only be low.

As the typical amount of available PDCCH control channel elements for uplink grants is low, preferably uplink grants with a low amount of control channel elements, i.e. with a low aggregation level shall be scheduled, in order to be able to schedule a higher amount of uplink transmissions.

Thus, the scheduling weights for uplink grants in this case decrease from 1 for the aggregation level 1 to 0.8 for the aggregation level 2, to 0.6 for the aggregation level 4 and finally to 0.4 for the aggregation level 8.

In the sixth row of the lookup table, the total amount of PDCCH control channel elements and the scheduling weights for uplink transmissions are given for a downlink subframe with the number 4 in which uplink and downlink grants are announced. The total amount of available PDCCH control channel elements is 84 and thus rather high.

As the total amount of available PDCCH control channel elements is rather high, the typical amount of available PDCCH control channel elements for uplink grants is approximately high and the typical amount of available PDCCH control channel elements for downlink grants is approximately medium.

As the typical amount of available PDCCH control channel elements for uplink grants is approximately high, preferably uplink grants with a high amount of control channel elements, i.e. with a high aggregation level shall be scheduled, as there are enough PDCCH control channel elements for scheduling the uplink transmissions.

Thus, the scheduling weights for uplink grants in this case increase from 0.4 for the aggregation level 1 to 0.6 for the aggregation level 2, to 0.8 for the aggregation level 4 and finally to 1 for the aggregation level 8.

The further subframes 5 to 9 are just a repetition of the subframes 0 to 4.

The embodiments described above are exemplarily related to the uplink/downlink configuration 1 as defined in the standard 3GPP 36.211 in chapter 4.2.

In the embodiments described above, the scheduling weights have been chosen empirically in order to show the wanted tendency with respect to the aggregation levels according to the invention. Furthermore, the minimum scheduling weight for uplink transmissions is 0.4 and thus higher as the minimum scheduling weight for downlink transmissions, which is 0,125. The reason is, that in a frame, there is anyway a higher amount of PDCCH control channel elements available for downlink grants than for uplink grants, as 6 subframes are available for downlink grants, and only 4 subframes are available for uplink grants.

Further embodiments of the invention can be related to other uplink/downlink configurations as described e.g. in the standard 3GPP 36.211 in chapter 4.2. For other uplink/downlink configurations, the total amount of available PDCCH control channel elements can be determined by subtracting the amount of resource elements scheduled for HARQ feedback e.g. according to the standard from the overall amount of resource elements in the control region, and the scheduling weights for downlink or uplink transmission can be determined based on the total amount of available PDCCH control channel elements.

In a preferred embodiment of the invention, the scheduling weights according to the invention as described above are combined with further scheduling weights which are e.g. based on the amount of data to be sent, i.e. if there are many data to be sent, the scheduling weight is higher, based on the delay, i.e. if a user terminal has not sent data for a long time, the scheduling weight is higher, or based on fairness, i.e. if a user terminal has sent a lot of data in the past, the scheduling weight is low. The different scheduling weights are preferably added resulting in an overall scheduling weight according to which the downlink and uplink transmissions are scheduled.

## Claims

1. A method for scheduling transmissions between a base station (BS) and user terminals (UE) by sending scheduling grants on physical downlink control channels in a subframe with a dedicated amount of control channel elements for each physical downlink control channel, **characterized in, that**
• priorities of said transmissions between the base station (BS) and the user terminals (UE) are determined based on the dedicated amount of control channel elements for each physical downlink control channel,
• and the transmissions between the base station (BS) and the user terminals (UE) are scheduled in the order of said priorities.

2. A method according to claim 1, **characterized in, that** said priorities are determined based on the types of the scheduling grants in the subframe.

3. A method according to claim 2, **characterized in, that**
• the priorities of transmissions in downlink increase with increasing amount of control channel elements for the respective physical downlink control channel if the scheduling grants in the subframe are only scheduling grants for downlink,
• and the priorities of transmissions in downlink decrease with increasing amount of control channel elements for the respective physical downlink control channel if the scheduling grants in the subframe are scheduling grants for uplink and downlink.

4. A method according to claim 3, **characterized in, that** the higher the total amount of resource elements that can be used as control channel elements in the subframe is, the lower the decrease with increasing amount of control channel elements for the respective physical downlink control channel is in case the scheduling grants in the subframe are scheduling grants for uplink and downlink.

5. A method according to claim 2, **characterized in, that**
• the priorities of transmissions in uplink increase with increasing amount of control channel elements for the respective physical downlink control channel if the total amount of resource elements that can be used as control channel elements in the subframe is above a predefined upper threshold,
• and the priorities of transmissions in uplink decrease with increasing amount of control channel elements for the respective physical downlink control channel if the total amount of resource elements that can be used as control channel elements in the subframe is below a predefined lower threshold.

6. A method according to claim 1, **characterized in, that** the priorities of the transmissions between the base station (BS) and the user terminals (UE) are determined by entries in a lookup table in the base station (BS).

7. A method according to claim 6, **characterized in, that** the entries in the lookup table are modified in the base station (BS) depending on the occupancy of control channel elements.

8. A base station (BS) for scheduling transmissions between said base station (BS) and user terminals (UE) by sending scheduling grants on physical downlink control channels in a subframe with a dedicated amount of control channel elements for each physical downlink control channel, **characterized in, that** the base station (BS) comprises at least one processing means which is adapted to
• determine priorities of said transmissions between the base station (BS) and the user terminals (UE) based on the dedicated amount of control channel elements for each physical downlink control channel,
• and schedule the transmissions between the base station (BS) and the user terminals (UE) in the order of said priorities.

9. A base station (BS) according to claim 8, **characterized in, that** said at least one processing means is adapted to store priorities of transmissions between the base station (BS) and the user terminals (UE) depending on an amount of control channel elements for a physical downlink control channel as entries in a lookup table in the base station (BS).

10. A base station (BS) according to claim 9, **characterized in, that** said at least one processing means is adapted to modify the entries in the lookup table depending on the occupancy of control channel elements.

11. A communication network (CN) comprising at least one base station (BS) according to claim 8.
